# EUROPEAN PATENT APPLICATION

(11) **EP 4 629 311 A1**
(43) Date of publication of application: **08.10.2025**
(21) Application number: 23898206.0
(22) Date of filing: 23.11.2023
(51) Int. Cl.: H01M 4/13, H01M 4/62, H01M 10/052, H01M 10/0585, H01M 10/0562, H01M 10/0565, H01M 4/02

(54) **ALL SOLID-STATE BATTERY**

(30) Priority: 29.11.2022 KR 20220163396
(71) Applicant: SAMSUNG SDI CO., LTD., Yongin-si, Gyeonggi-do 17084 (KR)
(72) Inventor: OH, Seunghyun, Yongin-si, Gyeonggi-do 17084 (KR); AN, Seonhyeok, Yongin-si, Gyeonggi-do 17084 (KR); JUNG, Mijung, Yongin-si, Gyeonggi-do 17084 (KR)
(74) Representative: Gulde & Partner
(86) International application number: PCT/KR2023/019040
(87) International publication number: WO 2024/117675

(57) **Abstract**

The present invention relates to an all solid-state battery comprising: a negative electrode; an electrolyte layer; and a positive electrode including a positive electrode layer and a current collector supporting the positive electrode layer, wherein the positive layer includes a first area adjacent to the electrolyte layer and a second area adjacent to the positive electrode current collector, the first area includes first solid-state electrolyte particles, the second area includes second solid-state electrolyte particles, and an average particle size of the first solid-state electrolyte particles is greater than that of the second solid-state electrolyte particles.

## Description

### TECHNICAL FIELD

An all-solid-state battery is disclosed.

### BACKGROUND ART

Recently, the rapid supplement of electronic devices such as mobile phones, laptop computers, and electric vehicles, using batteries require surprising increases in demands for rechargeable batteries with relatively high capacity and lighter weight. Particularly, a rechargeable lithium battery has recently drawn attention as a driving power source for portable devices, as it has lighter weight and high energy density. Accordingly, research and development to improve the performance of rechargeable lithium batteries is being actively conducted.

An all-solid-state battery among rechargeable lithium batteries refers to a battery in which all materials are solid, and in particular, a battery using a solid-state electrolyte. These all-solid-state batteries have excellent safety as there is no risk of electrolyte leakage, and they have the advantage of being easy to manufacture thin batteries.

In these all-solid-state batteries, ion transport occurs through physical contact between the positive or negative electrode and the solid-state electrolyte, and thus a contact area between the positive or negative electrode and the solid-state electrolyte is important. In order to increase this contact area, a method of reducing the solid-state electrolyte particle size has been studied, but in this case, there is a problem that the interfacial resistance increased, resulting in a decrease in a rapid charge/discharge performance of the battery.

### DETAILED DESCRIPTION OF THE INVENTION

### TECHNICAL PROBLEM

An embodiment provides an all-solid-state battery having excellent rapid charge/discharge performance and capacity.

### TECHNICAL SOLUTION

An embodiment provides an all-solid-state battery including a negative electrode; an electrolyte layer; and a positive electrode including a positive electrode layer and a current collector supporting the positive electrode layer, wherein the positive electrode layer includes a first area adjacent to the electrolyte layer and a second area adjacent to the current collector, the first area includes first solid-state electrolyte particles, the second area includes second solid-state electrolyte particles, and an average particle size of the first solid-state electrolyte particles is greater than an average particle size of the second solid-state electrolyte particles.

A ratio of the average particle size of the second solid-state electrolyte particles to the average particle size of the first solid-state electrolyte particles may be 1:1.1 to 1:40.

The positive electrode layer may be composed of the first area and the second area.

The first area may correspond to a thickness of less than or equal to 70% of the total thickness of the positive electrode layer. Additionally, the second area may correspond to a thickness of greater than or equal to 30% of the total thickness of the positive electrode layer.

The first solid-state electrolyte particles may include solid-state electrolyte large particles and solid-state electrolyte small particles, and the second solid-state electrolyte particles may include solid-state electrolyte small particles. According to an embodiment, the first solid-state electrolyte particles are solid-state electrolyte large particles and solid-state electrolyte small particles, and the second solid-state electrolyte particles are solid-state electrolyte small particles.

An average particle size ratio of the solid-state electrolyte small particles and the solid-state electrolyte large particles may be 1:1.5 to 1:40.

An average particle size of the above solid-state electrolyte large particles may be 1 µm to 20 µm. An average particle size of the solid-state electrolyte small particles may be 0.1 µm to 5 µm.

A thickness ratio of the first area and the second area may be 70:30 to 30:70.

The positive electrode layer may include a third area between the first area and the second area. The third area may include third solid-state electrolyte particles, and the third solid-state electrolyte particles may have a gradient in which an average particle size increases from a second surface in contact with the second area toward a first surface in contact with the first area. Herein, the first area may correspond to a thickness of less than or equal to 56% and greater than or equal to 24% based on 100% of a total thickness of the positive electrode layer, and the second area may correspond to a thickness of greater than or equal to 24% and less than or equal to 56% based on 100% of a total thickness of the positive electrode layer. Additionally, the third area may correspond to 20% to 50% of the total thickness of the positive electrode layer.

An average particle size of the third solid-state electrolyte particles on the second surface may be 0.1 µm to 5 µm, and an average particle size of the third solid-state electrolyte particles on the first surface may be 1 µm to 20 µm.

A particle size ratio of the first solid-state electrolyte particles of the first area to a particle size of the second solid-state electrolyte particles of the second area is greater than or equal to 1.1/1 and less than 5/1, and if the second surface in contact with the second area is set to 0% and the first surface in contact with the first area is set to 100%, an average particle size of the third solid-state electrolyte in the third area increases by 1% to 40% at a position that increases by 10% in a thickness direction from the second surface to the first surface of the positive electrode layer.

According to another embodiment, a particle size ratio of the first solid-state electrolyte particles of the first area to a particle size of the second solid-state electrolyte particles of the second area is greater than or equal to 5/1 and less than or equal to 40/1, and if the second surface in contact with the second area is set to 0% and the first surface in contact with the first area is set to 100%, in the third area, an average particle size of the third solid-state electrolyte increases by 40% to 390% at a position that increases by 10% in a thickness direction from the second surface to the first surface of the positive electrode layer.

The third area may be divided into two to five regions in the thickness direction, and the average particle size of the third solid-state electrolyte particles in each region may be different.

The third area may be divided into two to five regions in the thickness direction, the region in contact with the first area may be the first region, the region in contact with the second area may be the n region, and an average particle size of the third solid-state electrolyte particles may increase in the direction of the first region in the n region.

### ADVANTAGEOUS EFFECTS

An all-solid-state battery according to an embodiment may improve rapid charge/discharge performance and capacity of the battery.

### BRIEF DESCRIPTION OF THE DRAWINGS

FIG. 1 is a cross-sectional view schematically illustrating a positive electrode of an all-solid-state battery according to an embodiment.
FIG. 2 is a cross-sectional view schematically showing a positive electrode of an all-solid-state battery according to another embodiment.
FIG. 3 is a cross-sectional view schematically illustrating an all-solid-state battery according to an embodiment.
FIG. 4 is a cross-sectional view schematically illustrating an all-solid-state battery according to another embodiment.

### BEST MODE FOR PERFORMING INVENTION

Hereinafter, embodiments of the present invention will be described in detail. However, these embodiments are merely examples, the present invention is not limited thereto, and the present invention is defined by the scope of claims.

As used herein, when specific definition is not otherwise provided, it will be understood that when an element such as a layer, film, region, or substrate is referred to as being "on" another element, it may be directly on the other element or intervening elements may also be present.

In the present invention, "particle size" or "particle diameter" may be an average particle size. Additionally, the average particle size may be defined as the average particle size (D50) based on 50% of the cumulative volume in the cumulative size-distribution curve. The particle diameter may be, for example, measured by an electron microscopy examination using a scanning electron microscopy (SEM) or a field emission scanning electron microscopy (FE-SEM), or a laser diffraction method. It may be measured by the laser diffraction method as follows, and the particles to be measured are dispersed in a dispersion medium and then introduced into a commercially available laser diffraction particle diameter measuring apparatus (for example, MT 3000 of Microtrac Inc.,), ultrasonic waves of about 28 kHz are irradiated with an output of about 60 W, and an average particle diameter (D50) in 50% reference of the particle size distribution in a measuring apparatus may be calculated.

An all-solid-state battery according to an embodiment includes a negative electrode, an electrolyte layer, and a positive electrode, wherein the positive electrode includes a positive electrode layer and a current collector supporting the positive electrode layer, and the positive electrode layer includes a first area adjacent to the electrolyte layer and a second area adjacent to the positive electrode current collector. In an embodiment, the first area includes the first solid-state electrolyte particles, the second area includes the second solid-state electrolyte particles, and an average particle size of the first solid-state electrolyte particles may be greater than an average particle size of the second solid-state electrolyte particles.

The all-solid-state battery may also be expressed as an all-solid-state rechargeable battery, or an all-solid-state rechargeable lithium battery.

A ratio of the average particle size of the second solid-state electrolyte particles to the average particle size of the first solid-state electrolyte particles may be 1:1.1 to 40, 1:1.1 to 20, 1:1.5 to 10, 1:1.5 to 5, or 1:2 to 4.

In this way, by including first solid-state electrolyte particles having a large average particle size in the first area adjacent to the electrolyte layer, lithium ionic conductivity may be increased, thereby improving rapid charge/discharge characteristics and cycle-life characteristics. In addition, the second area adjacent to the current collector may include second solid-state electrolyte particles having a small average particle size to increase the contact area with the positive electrode active material, thereby increasing the capacity. In addition, because the second solid-state electrolyte particles having a small average particle size are included in the second area adjacent to the current collector, the ion transport path may be increased.

In this way, the effect of using solid-state electrolyte particles having different average particle sizes depending on the position of the positive electrode layer may be more effectively obtained if the ratio of the average particle size of the first solid-state electrolyte particles to the average particle size of the second solid-state electrolyte particles is within the above range.

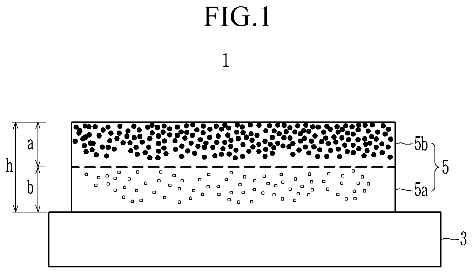

According to an embodiment, the positive electrode may be such that the positive electrode layer is composed of the first area and the second area. That is, the positive electrode layer may be distinguished into two regions. Referring to FIG. 1, the positive electrode 1 includes a current collector 3 and a positive electrode layer 5, and includes a first area 5a adjacent to the electrolyte layer, that is, not adjacent to the current collector, and a second area 5b adjacent to the current collector 3. Additionally, the average particle size of the first solid-state electrolyte particles included in the first area 5a may be larger than the average particle size of the second solid-state electrolyte particles included in the second area 5b. Only the first and second solid-state electrolyte particles are shown in the first area 5a and the second area 5b of FIG. 1, and particles other than the solid-state electrolyte particles are omitted.

In an embodiment, the first area represents a region corresponding to less than or equal to 70% of the total thickness of the positive electrode layer, that is, the term a shown in FIG. 1 represents an area corresponding to less than or equal to 70% of the total thickness (h) of the positive electrode layer. In addition, the second area represents a region corresponding to greater than or equal to 30% of the total thickness of the positive electrode layer, that is, the term b shown in FIG. 1 represents an area corresponding to greater than or equal to 30% of the total thickness (h) of the positive electrode layer.

In this way, if the positive electrode layer is composed of the first area and the second area, the first solid-state electrolyte particles may include solid-state electrolyte large particles and solid-state electrolyte small particles, and the second solid-state electrolyte particles may include solid-state electrolyte small particles. To explain this in more detail, the first solid-state electrolyte particles of the first area may include solid-state electrolyte having different particle sizes, e.g., solid-state electrolyte large particle sizes and solid-state electrolyte small particle sizes, and the second solid-state electrolyte particles of the second area may include only particles having a substantially uniform size, i.e. small particle sizes.

Here, an average particle size ratio of the solid-state electrolyte small particles and the solid-state electrolyte large particles may be 1:1.5 to 1:40, 1: 1.5 to 1 : 20, 1 :1.5 to 1 : 10, 1 : 2 to 1 : 5, or 1 : 2 to 1:4.

If the first area includes both large particles and small particles, the surface area of the solid-state electrolyte may be further increased compared to if it includes only large particles. In particular, if the first solid-state electrolyte particles include solid-state electrolyte large particles and solid-state electrolyte small particles having the above average particle size ratio, the number of connections between the active material and the solid-state electrolyte may be further increased.

In an embodiment, the average particle size of the solid-state electrolyte large particles may be 1 µm to 20 µm, and may also be 1 µm to 10 µm, 1.5 µm to 10 µm, or 2 µm to 5 µm. Additionally, the average particle size of the solid-state electrolyte small particles may be 0.1 µm to 5 µm, 0.5 µm to 4 µm, or 0.5 µm to 3 µm. If the average particle size of the solid-state electrolyte large particles is within the above range, the grain boundary resistance may be further reduced, thereby further improving the conductivity. In addition, if the average particle size of the solid-state electrolyte small particles is within the above range, there may be an advantage of reducing the porosity of the positive electrode.

A thickness ratio of the first area and the second area may be 70:30 to 30:70. If the thickness ratio of the first area and the second area falls within the above range, the ionic resistance of the positive electrode may be further reduced.

The positive electrode layer including the first area and the second area may be formed by coating a second positive electrode layer composition including second solid-state electrolyte particles on a current collector and drying it, and coating and drying the first solid-state electrolyte particles.

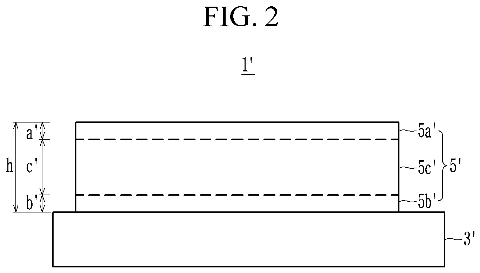

According to another embodiment, the positive electrode layer may further include a third area between the first area and the second area. As shown in FIG. 2, this structure includes a positive electrode 1' including a current collector 3' and a positive electrode layer 5', a first area 5a' adjacent to an electrolyte layer, that is, not adjacent to the current collector 3', a second area 5b' adjacent to the current collector 3', and a third area 5c' between the first area 5a' and the second area 5b'.

If the positive electrode layer further includes a third area, the third area may have a thickness of 20% to 50% of the total thickness of the positive electrode layer.

Herein, the first area may correspond to a thickness of less than or equal to 56% and greater than or equal to 24% based on 100% of a total thickness of the positive electrode layer, and the second area may correspond to a thickness of greater than or equal to 24% and less than or equal to 56% based on 100% of a total thickness of the positive electrode layer. That is, the thickness (a') corresponding to the first area shown in FIG. 2 may be less than or equal to 56% and greater than or equal to 24% of the total thickness (h) of the positive electrode layer, and the thickness (b') corresponding to the second area may be greater than or equal to 24% and less than or equal to 56% of the total thickness (h) of the positive electrode layer.

The configurations of the average particle sizes of the first solid-state electrolyte particles and the second solid-state electrolyte particles included in the first area and the second area is as described above.

The third area also includes solid-state electrolyte particles (hereinafter referred to as "third solid-state electrolyte particles"), and the average particle size of the third solid-state electrolyte particles may have a gradient. The gradient of the average particle size of the third solid-state electrolyte particles may increase gradually, and may also increase stepwise.

If the average particle size gradually increases, the third solid-state electrolyte particles may have a gradient in which the average particle size increases from the second surface in contact with the second area toward the first surface in contact with the first area. The second surface in contact with the second area may be set to 0%, and the first surface in contact with the first area may be set to 100%, so that a gradient may be created from the second surface toward the first surface.

If the gradient of the average particle size of the third solid-state electrolyte particles gradually increases, the gradient may be appropriately controlled according to the particle size ratio between the first solid-state electrolyte particles in the first area and the second solid-state electrolyte particles in the second area. For example, if the particle size ratio of the first solid-state electrolyte particles of the first area to the particle size of the second solid-state electrolyte particles of the second area is greater than or equal to 1.1/1 and less than 5/1, the particle size of the third solid-state electrolyte particles may increase by 1% to 40% at a position where the thickness increases by 10% in the thickness direction from the second surface to the first surface. At this time, the increased particle size value means 1% to 40% of the initial particle size, that is, 1% to 40% of the particle size value of the third solid-state electrolyte particle on the second surface. For example, if the third solid-state electrolyte particle size on the second surface is 0.1 µm, the third solid-state electrolyte particle size may be 0.101 µm to 0.14 µm at a position increased by 10% in the thickness direction, and may be 0.102 µm to 0.18 µm at a position increased by 20% in the thickness direction.

According to another embodiment, if a particle size ratio of the first solid-state electrolyte particles of the first area to a particle size of the second solid-state electrolyte particles of the second area is greater than or equal to 5/1 and less than or equal to 40/1, in the third area, the average particle size of the third solid-state electrolyte may increase by 40% to 390% at a position that increases by 10% in a thickness direction from the second surface to the first surface of the positive electrode layer. At this time, the increased particle size value means that it is 40% to 390 of the initial particle size, that is, 40% to 390% of the particle size value of the third solid-state electrolyte particle on the second surface. For example, if the third solid-state electrolyte particle size on the second surface is 1 µm, the third solid-state electrolyte particle size may be 4.9 µm at a position increased by 10% in the thickness direction, and may be 8.8 µm at a position increased by 20% in the thickness direction.

In the third area, if the average particle size of the solid-state electrolyte particles increases from the second surface to the first surface, the ionic resistance of the positive electrode may be further reduced. In particular, if the conditions are satisfied and increased, the ionic resistance of the positive electrode may be reduced more effectively.

If the solid-state electrolyte particles in the third area increase stepwise from the second surface toward the first surface, the third area is divided into two to five regions, and the average particle size of the solid-state electrolyte particles in each region may be different from each other. In this regard, to explain, the third area is divided into two to five regions in the thickness direction, and if the region in contact with the first area is referred to as the 1st region and the region in contact with the second area is referred to as the n region, the average particle size of the solid-state electrolyte particles may increase from the in direction of the 1st region from the n region.

The average particle size of the third solid-state electrolyte particles on the second surface may be 0.1 µm to 5 µm, and the average particle size of the third solid-state electrolyte particles on the first surface may be 1 µm to 20 µm.

If the average particle size of the third solid-state electrolyte particles on the second surface and the average particle size of the third solid-state electrolyte particles on the first surface are within the above ranges, the positive electrode pores may be further reduced, and the ionic resistance may be further reduced.

The stepwise increase in the average particle size of the solid-state electrolyte particles in the third area may be achieved by performing the process of coating the composition for forming the positive electrode layer on the current collector multiple times, and at this time, making the average particle size of the solid-state electrolyte particles included in the composition different. That is, the solid-state electrolyte particles included in the composition for forming the positive electrode layer that is directly coated on the current collector have a small average particle size, and if coating multiple times, that is, as the number of coatings increases, the average particle size of the solid-state electrolyte particles also increases and may be formed.

For each increase in the number of coatings, the average particle size of the solid-state electrolyte particles may increase by 2% to 780% of the initial average particle size of the solid-state electrolyte particles. Accordingly, the average particle size of the solid-state electrolyte particles of the second surface in contact with the second area may be formed to be 0.1 µm to 5 µm, and finally, the average particle size of the solid-state electrolyte particles in the n-th region in contact with the first area in contact with the electrolyte layer may be formed to be 1 µm to 20 µm.

The solid-state electrolyte may be a sulfide-based solid-state electrolyte, an oxide-based solid-state electrolyte, or a combination thereof.

The sulfide-based solid-state electrolyte may be, for example, Li₂S-P₂S₅, Li₂S-P₂S₅-LiX (X is a halogen element, for example, I or CI), Li₂S-P₂S₅-Li₂O, Li₂S-P₂S₅-Li₂O-Lil, Li₂S-SiS₂, Li₂S-SiS₂-LiI, Li₂S-SiS₂-LiBr, Li₂S-SiS₂-LiCl, Li₂S-SiS₂-B₂S₃-Lil, Li₂S-SiS₂-P₂S₅-Lil, Li₂S-B₂S₃, Li₂S-P₂S_{S}-ZₘSₙ (m and n are integers, respectively, and Z is Ge, Zn, or Ga), Li₂S-GeS₂, Li₂S-SiS₂-Li₃PO₄, Li₂S-SiS₂-LiₚMO_{q} (p and q are integers, and M is P, Si, Ge, B, Al, Ga, or In), and the like.

The sulfide-based solid-state electrolyte may be obtained by, for example, mixing Li₂S and P₂S₅ in a mole ratio of 50:50 to 90:10 or 50:50 to 80:20. Within the above mixing ratio range, a sulfide-based solid-state electrolyte having excellent ionic conductivity may be prepared. The ionic conductivity may be further improved by adding SiS₂, GeS₂, B₂S₃, and the like as other components thereto. Mechanical milling or a solution method may be applied as a mixing method. The mechanical milling is to make starting materials into particulates by putting the starting materials, ball mills, and the like in a reactor and fervently stirring them. The solution method may be performed by mixing the starting materials in a solvent to obtain a solid-state electrolyte as a precipitate. Additionally, additional firing may be performed after mixing. If additional firing is performed, the crystals of the solid-state electrolyte may become more solid.

For example, the solid-state electrolyte may be an argyrodite-type sulfide-based solid-state electrolyte. The sulfide-based solid-state electrolyte may be, for example, LiₐM_{b}P_{c}S_{d}Aₑ (wherein a, b, c, d, and e are all 0 or more and 12 or less, M is Ge, Sn, Si, or a combination thereof, and A is one of F, Cl, Br, or I), and specifically, may be Li₃PS₄, Li₇P₃S₁₁, Li₆PS₅Cl, Li₆PS₅Br, Li₆PS₅I, and the like.

The sulfide-based solid-state electrolyte may be amorphous or crystalline, or may be a mixture of the two. Of course, a commercially available solid-state electrolyte may be used as the sulfide-based solid-state electrolyte.

The oxide-based inorganic solid-state electrolyte may include, for example Li₁₊ₓTi₂₋ₓAl(PO₄)₃(LTAP) (0≤x≤4), Li_{1+x+y}AlₓTi₂₋ₓSi_{y}P_{3-y}O₁₂ (0<x<2, 0≤y<3), BaTiO₃, Pb(Zr,Ti)O₃(PZT), Pb₁₋ₓLaₓZr_{1-y}Ti_{y}O₃(PLZT) (0≤x<1, 0≤y<1), PB (Mg₃Nb_{2/3})O₃-PbTiO₃(PMN-PT), HfO₂, SrTiO₃, SnO₂, CeO₂, Na₂O, MgO, NiO, CaO, BaO, ZnO, ZrO₂, Y₂O₃, Al₂O₃, TiO₂, SiO₂, lithium phosphate (Li₃PO₄), lithium titanium phosphate (LiₓTi_{y}(PO₄)₃, 0<x<2, 0<y<3), Li_{1+x+y}(Al, Ga)ₓ(Ti, Ge)₂₋ₓSi_{y}P_{3-y}O₁₂ (0≤x≤1, 0≤y≤1), lithium lanthanum titanate (LiₓLa_{y}TiO₃, 0<x<2, 0<y<3), Li₂O, LiAlO₂, Li₂O-Al₂O₃-SiO₂-P₂O₅-TiO₂-GeO₂-based ceramics, Garnet ceramics Li₃₊ₓLa₃M₂O₁₂(M= Te, Nb, or Zr; and x is an integer of 1 to 10), or a mixture thereof.

The solid-state electrolyte may in the form of particles, and an average particle size (D50) may be less than or equal to 5.0 µm, for example, 0.1 µm to 5.0 µm, 0.5 µm to 5.0 µm, 0.5 µm to 4.0 µm, 0.5 µm to 3.0 µm, 0.5 µm to 2.0 µm, or 0.5 µm to 1.0 µm. These solid-state electrolytes may effectively penetrate between the positive electrode active materials, and have excellent contact with the positive electrode active materials and connectivity between the solid-state electrolyte particles.

In an embodiment, the first solid-state electrolyte particles, the second solid-state electrolyte particles, and the third solid-state electrolyte particles may be the same or different from each other.

In the positive electrode layer, a total amount of the first solid-state electrolyte particles, the second solid-state electrolyte particles, and the third solid-state electrolyte particles may be 0.1 wt% to 35 wt%, for example, 1 wt% to 35 wt%, 5 wt% to 30 wt%, 8 wt% to 25 wt%, or 10 wt% to 20 wt% based on a total weight of the positive electrode layer. In addition, the positive electrode layer may include 65 wt% to 99 wt% of the positive electrode active material and 1 wt% to 35 wt% of the solid-state electrolyte, for example, 80 wt% to 90 wt% of the positive electrode active material and 10 wt% to 20 wt% of the solid-state electrolyte based on a total weight of the positive electrode active material and the solid-state electrolyte. If the solid-state electrolyte is included in the positive electrode in such an amount, the efficiency and cycle-life characteristics of the all-solid-state battery may be improved without reducing the capacity.

It is only necessary to control the total amount of solid-state electrolyte particles included in the positive electrode layer, and there is no need to control the amount of solid-state electrolyte particles included in each region.

The positive electrode layer includes a positive electrode active material.

The positive electrode active material may be a positive electrode active material capable of reversibly intercalating and deintercalating lithium ions. For example, the positive electrode active material may be, for example, at least one of a composite oxide of lithium and a metal selected from cobalt, manganese, nickel, and a combination thereof. Examples of the positive electrode active material may include LiₐA_{1-b}B¹_{b}D¹₂ (0.90 ≤ a ≤ 1.8, 0 ≤ b ≤ 0.5); LiₐE_{1-b}B¹_{b}O_{2-c}D¹_{c} (0.90≤a≤1.8, 0≤b≤0.5, 0≤c≤0.5); LiₐE_{2-b}B¹_{b}O_{4-c}D¹_{c}; (0.90≤a≤1.8, 0≤b≤0.5, 0≤c≤0.5); LiₐNi_{1-b-c}Co_{b}B¹_{c}D¹_{α} (0.90≤a≤ 1.8, 0≤b≤0.5, 0≤c≤0.5, 0<α≤2); LiₐNi_{1-b-c}Co_{b}B¹_{c}O_{2-α}F¹_{α} (0.90≤a≤1.8, 0≤b≤0.5, 0≤c≤0.5, 0<α<2); LiₐNi_{1-b-c}Co_{b}B¹_{c}O_{2-α}F¹₂ (0.90≤a≤1.8, 0≤b≤0.5, 0≤c≤0.5, 0<α<2); LiₐNi_{1-b-c}Mn_{b}B¹_{c}D¹_{α} (0.90≤a≤1.8, 0≤b≤0.5, 0≤c≤0.5, 0<α≤2); LiₐNi_{1-b-c}Mn_{b}B¹_{c}O_{2-α}F¹_{α} (0.90≤a≤1.8, 0≤b≤0.5, 0≤c≤0.5, 0<α<2); LiₐNi_{1-b-c}Mn_{b}B¹_{c}O_{2-α}F¹₂ (0.90≤a≤1.8, 0≤b≤0.5, 0≤c≤0.5, 0<α<2); LiₐNi_{b}E_{c}G_{d}O₂ (0.90≤a≤1.8, 0≤b≤0.9, 0≤c≤0.5, 0.001≤d≤0.1); LiₐNi_{b}Co_{c}L¹_{d}GₑO₂ (0.90≤a≤1.8, 0≤b≤0.9, 0≤c≤0.5, 0≤d≤0.5, 0≤e≤0.1); LiₐNiG_{b}O₂ (0.90≤a≤1.8, 0.001≤b≤0.1); LiₐCoG_{b}O₂ (0.90≤a≤1.8, 0.001≤b≤0.1); LiₐMnG_{b}O₂ (0.90≤a≤1.8, 0.001≤b≤0.1); LiₐMn₂G_{b}O₄ (0.90≤a≤1.8, 0.001≤b≤0.1); QO₂; QS₂; LiQS₂; V₂O₅; LiV₂O₅; LiI¹O₂; LiNiVO₄; Li_{(3-f)}J₂(PO₄)₃(0≤f≤2); Li_{(3-f)}Fe₂(PO₄)₃(0≤f≤2); or LiFePO₄.

In the above chemical formulas, A is Ni, Co, Mn, or a combination thereof; B¹ is Al, Ni, Co, Mn, Cr, Fe, Mg, Sr, V, a rare-earth element, or a combination thereof; D¹ is O, F, S, P, or a combination thereof; E is Co, Mn, or a combination thereof; F¹ is F, S, P, or a combination thereof; G is Al, Cr, Mn, Fe, Mg, La, Ce, Sr, V, or a combination thereof; Q is Ti, Mo, Mn, or a combination thereof; I¹ is Cr, V, Fe, Sc, Y, or a combination thereof; J is V, Cr, Mn, Co, Ni, Cu, or a combination thereof; and L¹ is Mn, Al, or a combination thereof.

According to an embodiment, the positive electrode active material may be a ternary lithium transition metal such as LiNiₓCo_{y}Al_{z}O₂ (NCA), LiNiₓCo_{y}Mn_{z}O₂ (NCM) (wherein 0<x<1, 0<y<1, 0<z<1, x+y+z=1).

Also, the compounds may have a coating layer on the surface, or may be mixed with another compound having a coating layer. The coating layer may include at least one coating element compound selected from an oxide of a coating element, a hydroxide of a coating element, an oxyhydroxide of a coating element, an oxycarbonate of a coating element, and a hydroxyl carbonate of a coating element. The compound for the coating layer may be amorphous or crystalline. The coating element included in the coating layer may include Mg, Al, Co, K, Na, Ca, Si, Ti, V, Sn, Ge, Ga, B, As, Zr, or a mixture thereof. The coating layer may be disposed in a method having no adverse influence on properties of a positive electrode active material by using these elements in the compound, and for example, the method may include any coating method such as spray coating, dipping, and the like, but is not illustrated in more detail because it is well-known in the related field.

In addition, as the coating layer, any known coating layer for the positive electrode active material of an all-solid-state battery may be applied, examples of which include Li₂O-ZrO₂ (LZO).

Here, examples of the shape of the positive electrode active material include particle shapes such as spheres and ellipsoids. Additionally, the average particle size of the positive electrode active material is not particularly limited, and may be within a range applicable to the positive electrode active material of existing all-solid-state rechargeable batteries. Additionally, the amount of the positive electrode active material in the positive electrode active material layer is not particularly limited, and may be within a range applicable to the positive electrode layer of an existing all-solid-state rechargeable batteries.

In an embodiment, the positive electrode active material may be included in an amount of 55 wt% to 99.7 wt%, for example, 74 wt% to 89.8 wt%, based on the total weight of the positive electrode layer. If included in the above range, the capacity of the all-solid-state battery may be maximized while improving cycle-life characteristics.

The positive electrode layer may further include a conductive material. The conductive material is used to provide conductivity to the electrode, and any material that does not cause chemical change and is electronically conductive may be used. The conductive material may include, for example, a carbon-based material such as natural graphite, artificial graphite, carbon black, acetylene black, ketjen black, a carbon fiber, a carbon nanofiber, or a carbon nanotube; a metal-based material including copper, nickel, aluminum, or silver in the form of metal powder or metal fiber; a conductive polymer such as a polyphenylene derivative; or a mixture thereof.

The conductive material may be included in an amount of 0.1 wt% to 5 wt%, or 0.1 wt% to 3 wt%, based on a total weight of each component of the positive electrode for the all-solid-state battery, or based on a total weight of the positive electrode layer. Within the above amount range, the conductive material may improve electrical conductivity without deteriorating battery performance.

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet.

The negative electrode includes a current collector and a negative electrode layer on one surface of the current collector.

The negative electrode layer may be a negative electrode active material layer or a negative electrode coating layer. Alternatively, the negative electrode layer may be a lithium metal layer.

The negative electrode active material layer includes a negative electrode active material and may further include a binder, a conductive material, and/or a solid-state electrolyte.

The negative electrode active material may include a material that reversibly intercalates/deintercalates lithium ions, a lithium metal, a lithium metal alloy, a material capable of doping/dedoping lithium, or transition metal oxide.

The material that reversibly intercalates/deintercalates lithium ions may include, for example crystalline carbon, amorphous carbon, or a combination thereof as a carbon-based negative electrode active material. The crystalline carbon may be unspecified-shaped, or sheet-shaped, flake-shaped, spherical-shaped, or fiber-shaped natural graphite or artificial graphite, and the amorphous carbon may be a soft carbon, a hard carbon, a mesophase pitch carbonization product, calcined coke, and the like.

The lithium metal alloy includes an alloy of lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material or a Sn-based negative electrode active material. The Si-based negative electrode active material may be silicon, a silicon-carbon composite, SiOₓ (0<x<2), a Si-Q alloy (wherein Q is an element selected from an alkali metal, an alkaline-earth metal, a Group 13 element, a Group 14 element, a Group 15 element, a Group 16 element, a transition metal, a rare earth element, and a combination thereof, and not Si), and the Sn-based negative electrode active material may be Sn, SnO₂, a Sn-R alloy (wherein R is an element selected from an alkali metal, an alkaline-earth metal, a Group 13 element, a Group 14 element, a Group 15 element, a Group 16 element, a transition metal, a rare earth element, and a combination thereof, and not Sn) and the like. At least one of these materials may be mixed with SiO₂. The elements Q and R may be selected from Mg, Ca, Sr, Ba, Ra, Sc, Y, Ti, Zr, Hf, Rf, V, Nb, Ta, Db, Cr, Mo, W, Sg, Tc, Re, Bh, Fe, Pb, Ru, Os, Hs, Rh, Ir, Pd, Pt, Cu, Ag, Au, Zn, Cd, B, Al, Ga, Sn, In, TI, Ge, P, As, Sb, Bi, S, Se, Te, Po, and a combination thereof.

The silicon-carbon composite may be, for example, a silicon-carbon composite including a core including crystalline carbon and silicon particles and an amorphous carbon coating layer on the surface of the core. The crystalline carbon may be artificial graphite, natural graphite, or a combination thereof. The above amorphous carbon precursor may be coal-based pitch, mesophase pitch, petroleum-based pitch, coal-based oil, petroleum-based heavy oil, or a polymer resin such as a phenol resin, a furan resin, or a polyimide resin. In this case, the amount of silicon may be 10 wt% to 50 wt% based on the total weight of the silicon-carbon composite. Additionally, an amount of the crystalline carbon may be 10 wt% to 70 wt% based on a total weight of the silicon-carbon composite, and an amount of the amorphous carbon may be 20 wt% to 40 wt% based on a total weight of the silicon-carbon composite. Additionally, the thickness of the amorphous carbon coating layer may be 5 nm to 100 nm.

The average particle size (D50) of the silicon particles may be 10 nm to 20 µm, for example, 10 nm to 500 nm. The silicon particles may exist in an oxidized form, and in this case, an atomic amount ratio of Si:O in the silicon particles indicating a degree of oxidation may be a weight ratio of 99:1 to 33:67. The silicon particles may be SiOₓ particles, wherein the range of x in SiOₓ may be greater than 0 and less than 2. Here, the average particle size (D50) is measured by a particle size analyzer using laser diffraction and means the diameter of particles with a cumulative 50 volume% in the particle size distribution.

The Si-based negative electrode active material or Sn-based negative electrode active material may be mixed with the carbon-based negative electrode active material. If the Si-based negative electrode active material or Sn-based negative electrode active material and the carbon-based negative electrode active material are mixed and used, the mixing ratio may be a weight ratio of 1:99 to 90:10.

In the negative electrode active material layer, the negative electrode active material may be included in an amount of 95 wt% to 99 wt% based on a total weight of the negative electrode active material layer.

In an embodiment, the negative electrode active material layer further includes the binder and optionally may further include the conductive material. An amount of the binder in the negative electrode active material layer may be 1 wt% to 5 wt% based on a total weight of the negative electrode active material layer. In addition, if a conductive material is further included, the negative electrode active material layer may include 90 wt% to 98 wt% of the negative electrode active material, 1 wt% to 5 wt% of the binder, and 1 wt% to 5 wt% of the conductive material.

The binder serves to well adhere the negative electrode active material particles to each other and also to adhere the negative electrode active material to the current collector. The binder may include a water-insoluble binder, a water-soluble binder or a combination thereof.

The water-insoluble binder may include, for example, polyvinylchloride, carboxylated polyvinylchloride, polyvinylfluoride, an ethylene oxide-containing polymer, an ethylene propylene copolymer, polystyrene, polyvinylpyrrolidone, polyurethane, polytetrafluoroethylene, polyvinylidene fluoride, polyethylene, polypropylene, polyamideimide, polyimide, or a combination thereof.

The water-soluble binder may include a rubber-based binder or a polymer resin binder. The rubber binder may be selected from a styrene-butadiene rubber, an acrylated styrene-butadiene rubber, an acrylonitrile-butadiene rubber, an acrylic rubber, a butyl rubber, a fluorine rubber, and a combination thereof. The polymer resin binder may be selected from polyethylene oxide, polyvinylpyrrolidone, polyepichlorohydrin, polyphosphazene, polyacrylonitrile, an ethylene propylene diene copolymer, polyvinyl pyridine, chlorosulfonated polyethylene, latex, a polyester resin, an acrylic resin, a phenol resin, an epoxy resin, polyvinyl alcohol, and a combination thereof.

If a water-soluble binder is used as the above negative binder, a thickener capable of imparting viscosity may be used together, and the thickener may include, for example, a cellulose-based compound. The cellulose-based compound may include carboxymethyl cellulose, hydroxypropylmethyl cellulose, methyl cellulose, an alkali metal salt thereof, or a combination thereof. The alkali metal may be Na, K, or Li. An amount of such thickener used may be 0.1 parts by weight to 3 parts by weight based on 100 parts by weight of the negative electrode active material. The cellulose-based compound may also act as a binder.

The binder is not limited thereto, and any binder used in the relevant technical field may be used, and an amount of the binder may also be appropriately adjusted.

The conductive material is used to provide conductivity to the electrode, and may include, for example, a carbon-based material such as natural graphite, artificial graphite, carbon black, acetylene black, ketjen black, a carbon fiber, and a carbon nanotube; a metal-based material in the form of metal powder or metal fibers, including copper, nickel, aluminum, and silver; a conductive polymer such as a polyphenylene derivative; or a mixture thereof.

The negative electrode current collector may be selected from a copper foil, a nickel foil, a stainless steel foil, a titanium foil, a nickel foam, a copper foam, a polymer substrate coated with a conductive metal, and a combination thereof.

If the negative electrode layer is a negative electrode coating layer, it means that the negative electrode is a deposition-type negative electrode. The deposition-type negative electrode means a negative electrode that does not include a negative electrode active material if the battery is assembled, but in which lithium metal or the like is precipitated if the battery is charged and this acts as a negative electrode active material. To explain this in more detail, if charging an all-solid-state battery, lithium ions are deintercalated from the positive electrode active material, pass through the solid-state electrolyte, and move toward the negative electrode, and are deposited on the negative electrode current collector, resulting in the formation of a lithium deposition layer between the current collector and the negative electrode coating layer. A negative electrode having such a lithium deposition layer is called a deposition-type negative electrode.

That is, a lithium deposition layer may be formed between the negative electrode current collector and the negative electrode layer.

The charging process may be a formation process performed 1 time to 3 times at 0.05 C to 1 C at about 25 °C to 50 °C.

A thickness of the lithium deposition layer may be 10 µm to 50 µm. For example, the thickness of the lithium deposition layer may be greater than or equal to 10 µm, greater than or equal to 20 µm, greater than or equal to 30 µm, or greater than or equal to 40 µm and less than or equal to 50 µm, less than or equal to 40 µm, less than or equal to 30 µm, or less than or equal to 20 µm. If the thickness of the lithium deposition layer is within the above range, there may be an advantage in that lithium may be reversibly precipitated during charge/discharge, thereby further improving the cycle-life.

The negative electrode coating layer may include a metal, a carbon material, or a combination thereof that acts as a catalyst. In the negative electrode coating layer, for example, a metal may be supported on a carbon material, or a metal and a carbon material may be present in a mixture. In an embodiment, the negative electrode coating layer may include a metal and a carbon material.

The carbon material may be, for example, crystalline carbon, amorphous carbon, or a combination thereof, and may be amorphous carbon. The crystalline carbon may be, for example, natural graphite, artificial graphite, mesophase carbon microbeads, or a combination thereof. The amorphous carbon may be, for example, carbon black, acetylene black, denka black, ketjen black, furnace black, activated carbon, graphene, or a combination thereof. An example of the carbon black is Super P (Timcal). The amorphous carbon is not limited to this, and anything classified as amorphous carbon in the relevant field is of course possible.

The amorphous carbon may be a single particle, may have the form of a secondary particle in which a plurality of primary particles are aggregated, or may be a combination of these.

The particle size of the above single particle may be from 10 nm to 60 mm. In addition, the particle size of the primary particle may be 20 nm to 100 nm, and the particle size of the secondary particle may be 1 µm to 20 µm.

In an embodiment, the particle size of the primary particles may be greater than or equal to 20 nm, greater than or equal to 30 nm, greater than or equal to 40 nm, greater than or equal to 50 nm, greater than or equal to 60 nm, greater than or equal to 70 nm, greater than or equal to 80 nm, or greater than or equal to 90 nm, and less than or equal to 100 nm, less than or equal to 90 nm, less than or equal to 80 nm, less than or equal to 70 nm, less than or equal to 60 nm, less than or equal to 50 nm, less than or equal to 40 nm, or less than or equal to 30 nm.

In an embodiment, the particle size of the secondary particles may be greater than or equal to 1 µm, greater than or equal to 3 µm, greater than or equal to 5 µm, greater than or equal to 7 µm, greater than or equal to 10 µm, or greater than or equal to 15 µm, and less than or equal to 20 µm, less than or equal to 15 µm, less than or equal to 10 µm, less than or equal to 7 µm, less than or equal to 5 µm, or less than or equal to 3 µm.

The shape of the primary particles may be spherical, elliptical, plate-shaped, and a combination thereof, and in an embodiment, the shape of the primary particles may be spherical, elliptical, and a combination thereof.

The metal may be any one selected from Ag, Zn, Al, Sn, Mg, Ge, Cu, In, Ni, Bi, Au, Si, Pt, Pd, and a combination thereof, and in an embodiment may be Ag. If the negative electrode coating layer includes the above metal, the electrical conductivity of the negative electrode may be improved.

The metal may be a metal particle, and the metal particle may have a size of 5 nm to 800 nm. The size of the metal particle may be greater than or equal to 5 nm, greater than or equal to 50 nm, greater than or equal to 100 nm, greater than or equal to 150 nm, greater than or equal to 200 nm, greater than or equal to 250 nm, greater than or equal to 300 nm, greater than or equal to 350 nm, greater than or equal to 400 nm, greater than or equal to 450 nm, greater than or equal to 500 nm, greater than or equal to 550 nm, greater than or equal to 600 nm, greater than or equal to 650 nm, greater than or equal to 700 nm, or greater than or equal to 750 nm. In addition, the size of the metal particle may be less than or equal to 800 nm, less than or equal to 750 nm, less than or equal to 700 nm, less than or equal to 650 nm, less than or equal to 600 nm, less than or equal to 550 nm, less than or equal to 500 nm, less than or equal to 450 nm, less than or equal to 400 nm, less than or equal to 350 nm, or less than or equal to 300 nm and less than or equal to 250 nm, less than or equal to 200 nm, less than or equal to 150 nm, less than or equal to 100 nm, or less than or equal to 50 nm. If the size of the metal particles is within the above range, the battery characteristics (e.g., cycle-life characteristics) of the all-solid-state battery may be improved.

If the negative electrode coating layer includes a carbon-based material and metal particles, a mixing ratio of the carbon-based material and the metal particles may be a weight ratio of 1:1 to 99:1. For example, the weight of the carbon-based material to the metal particles may be greater than or equal to 1, greater than or equal to 2, greater than or equal to 3, greater than or equal to 4, greater than or equal to 5, greater than or equal to 10, greater than or equal to 15, greater than or equal to 20, greater than or equal to 25, greater than or equal to 30, greater than or equal to 35, greater than or equal to 40, greater than or equal to 45, greater than or equal to 50, greater than or equal to 55, greater than or equal to 60, greater than or equal to 65, greater than or equal to 70, greater than or equal to 75, greater than or equal to 80, greater than or equal to 85, greater than or equal to 90, or greater than or equal to 95, and less than or equal to 99, less than or equal to 95, less than or equal to 90, less than or equal to 85, less than or equal to 80, less than or equal to 75, less than or equal to 70, less than or equal to 65, less than or equal to 60, less than or equal to 55, less than or equal to 50, less than or equal to 45, less than or equal to 40, less than or equal to 35, less than or equal to 30, less than or equal to 25, less than or equal to 20, less than or equal to 15, less than or equal to 10, less than or equal to 5, less than or equal to 4, less than or equal to 3, or less than or equal to 2. For example, the weight ratio of the carbon-based material to the metal particles may be 1:1 to 5:1, 1:1 to 10:1, 1:1 to 20:1, 1:1 to 30:1, 1:1 to 40:1, 1:1 to 50:1, 1:1 to 60:1, 1:1 to 70:1, 1:1 to 80:1, or 1:1 to 90:1. If the carbon-based material and the metal particles are included in the above weight ratio, the electrical conductivity of the negative electrode may be further improved.

Additionally, the negative electrode coating layer may further include a binder, a conductive material, and/or a solid-state electrolyte.

The binder and the conductive material are the same as those described in the negative electrode active material layer.

The solid-state electrolyte may be a sulfide-based solid-state electrolyte, an oxide-based solid-state electrolyte, or a combination thereof as described above for the positive electrode. The solid-state electrolyte included in the negative electrode may be the same as or different from the solid-state electrolyte included in the positive electrode.

The negative electrode layer may further include an additive such as a filler, a dispersant, and an ion conductive material. In addition, known materials generally used in all-solid-state batteries may be used as a filler, a dispersant, an ion conductive material, etc. that may be included in the negative electrode layer.

The thickness of the negative electrode coating layer may be 1 µm to 15 µm, or 5 µm to 10 µm.

The current collector may include, for example, indium (In), copper (Cu), magnesium (Mg), stainless steel, titanium (Ti), iron (Fe), cobalt (Co), nickel (Ni), zinc (Zn), aluminum (Al), germanium (Ge), lithium (Li), or an alloy thereof, and may be in the form of a foil or sheet. A thickness of the current collector may be 1 µm to 20 µm, 5 µm to 15 µm, or 7 µm to 10 µm.

The electrolyte layer may include a solid-state electrolyte. The solid-state electrolyte may be an inorganic solid-state electrolyte such as a sulfide-based solid-state electrolyte, an oxide-based solid-state electrolyte, a halide-based solid-state electrolyte, or a solid polymer electrolyte.

The sulfide-based solid-state electrolyte and the oxide-based solid-state electrolyte are as described above, and may be the same as or different from the solid-state electrolyte included in the positive electrode or the negative electrode.

The solid polymer electrolyte may include, for example, one or more selected from polyethylene oxide, poly(diallyldimethylammonium) trifluoromethanesulfonylimide (poly(diallyldimethylammonium)TFSI), Cu₃N, Li₃N, LiPON, Li₃PO₄·Li₂S·SiS₂, Li₂S·GeS₂·Ga₂S₃, Li₂O·11Al₂O₃, Na₂O·11Al₂O₃, (Na,Li)₁₊ₓTi₂₋ₓAlₓ(PO₄)₃(0.1≤x≤0.9), Li₁₊ₓHf₂₋ₓAlₓ(PO₄)₃ (0.1≤x≤0.9), Na₃Zr₂Si₂PO₁₂, Li₃Zr₂Si₂PO₁₂, Na₅ZrP₃O₁₂, Na₅TiP₃O₁₂, Na₃Fe₂P₃O₁₂, Na₄NbP₃O₁₂, Na-silicates, Li_{0.3}La_{0.5}TiO₃, Na₅MSi₄O₁₂ (wherein M is a rare earth element of Nd, Gd, Dy, and the like), Li₅ZrP₃O₁₂, Li₅TiP₃O₁₂, Li₃Fe₂P₃O₁₂, Li₄NbP₃O₁₂, Li₁₊ₓ(M,Al,Ga)ₓ(Ge_{1-y}Ti_{y})₂₋ₓ(PO₄)₃ (x≤0.8, 0≤y≤1.0, M is Nd, Sm, Eu, Gd, Tb, Dy, Ho, Er, Tm, or Yb), Li_{1+x+y}QₓTi₂₋ₓSi_{y}P_{3-y}O₁₂ (0<x≤0.4, 0<y≤0.6, and Q is Al or Ga), Li₆BaLa₂Ta₂O₁₂, Li₇La₃Zr₂O₁₂, Li₅La₃Nb₂O₁₂, Li₅La₃M₂O₁₂ (M is Nb or Ta), and Li₇₊ₓAₓLa₃₋ₓZr₂O₁₂ (0<x<3, A is Zn).

The halide-based solid-state electrolyte may include a Li element, an M element (M is a metal other than Li), and an X element (X is a halogen). Examples of X may include F, CI, Br, and I. In particular, in the halide-based solid-state electrolyte, at least one of Br and Cl is suitable as the above X. In addition, examples of M may include metal elements such as Sc, Y, B, Al, Ga, and In.

A composition of the halide-based solid-state electrolyte is not particularly limited, but may be represented by Li₆₋₃ₐMₐBr_{b}Cl_{c} (where M is a metal other than Li, 0<a<2, 0≤b≤6, 0≤c≤6, b+c=6). At this time, a may be 0.75 or more, 1 or more, and a may be 1.5 or less. The b may be 1 or more, and may be 2 or more. Additionally, the c may be 3 or more, and may be 4 or more. Specific examples of the halide-based solid-state electrolyte may be Li₃YBr₆, Li₃YCl₆, or Li₃YBr₂Cl₄.

The electrolyte layer may further include a binder. At this time, the binder may be a styrene butadiene rubber, a nitrile butadiene rubber, polytetrafluoroethylene, polyvinylidene fluoride, polyethylene, an acrylate-based polymer, or a combination thereof, but is not limited thereto, and anything used as a binder in the art may be used. The acrylate-based polymer may be butyl acrylate, polyacrylate, polymethacrylate, or a combination thereof.

A thickness of the solid-state electrolyte layer may be, for example, 1 µm to 150 µm.

The electrolyte layer may further include an alkali metal salt, an ionic liquid, or a combination thereof.

The alkali metal salt may be, for example, a lithium salt. An amount of the lithium salt in the solid-state electrolyte layer may be greater than or equal to 1 M, for example, 1 M to 4 M. In this case, the lithium salt may improve ionic conductivity by improving lithium ion mobility of the solid-state electrolyte layer.

The lithium salt may include, for example, LiSCN, LiN(CN)₂, Li(CF₃SO₂)₃C, LiC₄F₉SO₃, LiN(SO₂CF₂CF₃)₂, LiCl, LiF, LiBr, Lil, LiB(C₂O₄)₂, LiBF₄, LiBF₃(C₂F₅), lithium bis(oxalato) borate (LiBOB), lithium oxalyldifluoroborate (LIODFB), lithium difluoro(oxalato) borate (LiDFOB), lithium bis(trifluoromethanesulfonyl)imide (LiTFSI, LiN(SO₂CF₃)₂), lithium bis(fluorosulfonyl)imide, LiFSI, LiN (SO₂F)₂), LiCF₃SO₃, LiAsF₆, LiSbF₆, LiClO₄, or a mixture thereof.

In addition, the lithium salt may be an imide-based salt, for example, the imide-based lithium salt may be lithium bis(trifluoromethane sulfonyl) imide (LiTFSI, LiN(SO₂CF₃)₂), and lithium bis(fluorosulfonyl)imide (LiFSI, LiN(SO₂F)₂). The lithium salt may maintain or improve ionic conductivity by appropriately maintaining chemical reactivity with the ionic liquid.

The ionic liquid has a melting point below room temperature, so it is in a liquid state at room temperature and refers to a salt or room temperature molten salt composed of ions alone.

The ionic liquid may be a compound including a) at least one cation selected from ammonium-based, pyrrolidinium-based, pyridinium-based, pyrimidinium-based, imidazolium-based, piperidinium-based, pyrazolium-based, oxazolium-based, pyridazinium-based, phosphonium-based, sulfonium-based, triazolium-based, and a mixture thereof, and b) at least one anion selected from BF₄⁻, PF₆⁻, AsF₆⁻, SbF₆⁻, AlCl₄⁻, HSO₄⁻, ClO₄⁻, CH₃SO₃⁻, CF₃CO₂⁻, Cl⁻, Br⁻, I⁻, BF₄⁻, SO₄⁻, CF₃SO₃⁻, (FSO₂)₂N⁻, (C₂F₅SO₂)₂N⁻, (C₂F₅SO₂)(CF₃SO₂)N⁻, and (CF₃SO₂)₂N⁻.

The ionic liquid may be, for example, one or more selected from N-methyl-N-propylpyrrolidinium bis(trifluoromethanesulfonyl)imide N-butyl-N-methylpyrrolidium bis(3-trifluoromethylsulfonyl) imide, 1-butyl-3-methylimidazolium bis(trifluoromethylsulfonyl)amide, and 1-ethyl-3-methylimidazolium bis(trifluoromethylsulfonyl)amide.

In the solid-state electrolyte layer, the solid-state electrolyte and the ionic liquid may be used in a weight ratio of 0.1:99.9 to 90:10, for example, 10:90 to 90:10, 20:80 to 90:10, 30:70 to 90:10, 40:60 to 90:10, or 50:50 to 90:10.

The solid-state electrolyte layer may be formed by adding a solid-state electrolyte to a binder solution, coating it on a base film, and drying the resultant. The solvent of the binder solution may be isobutyryl isobutyrate, xylene, toluene, benzene, hexane, or a combination thereof. A forming process of the solid-state electrolyte layer is well known in the art, and thus a detailed description thereof will be omitted.

In an embodiment, the all-solid-state battery may additionally include a cushioning material to cushion thickness changes that occur during charging and discharging. The cushioning material may be present between the negative electrode and the case, and in the case of a battery in which one or more electrode assemblies are stacked, it may be present between different electrode assemblies.

The cushioning material may include a material having an elastic recovery rate of 50% or more and an insulating function, and specifically, may include a silicone rubber, an acrylic rubber, a fluorine rubber, nylon, a synthetic rubber, or a combination thereof. The cushioning material may exist in the form of a polymer sheet.

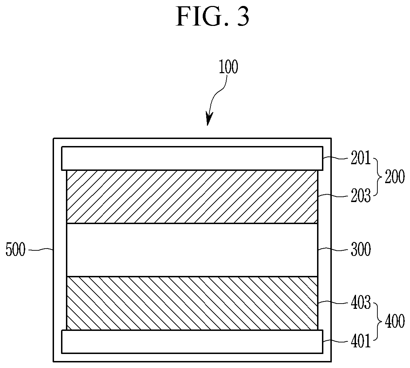

FIG. 3 is a cross-sectional view of an all-solid-state battery according to an embodiment. Referring to FIG. 3, the all-solid-state battery 100 may have a structure in which an electrode assembly in which a negative electrode 400 including a negative electrode current collector 401 and a negative electrode layer 403, a solid-state electrolyte layer 300, and a positive electrode 200 including a positive electrode active material layer 203 and a positive electrode current collector 201 are stacked is housed in a case such as a pouch. The all-solid-state battery 100 may further include an elastic layer 500 on the outer surface of at least one of the positive electrode 200 and the negative electrode 400. FIG. 3 illustrates one electrode assembly including a negative electrode 400, a solid-state electrolyte layer 300, and a positive electrode 200, but an all-solid-state battery may be manufactured by stacking two or more electrode assemblies.

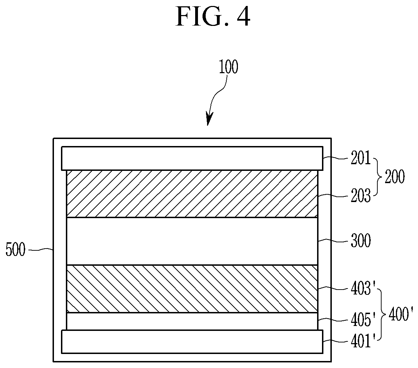

FIG. 4 schematically illustrates the structure of an all-solid-state battery according to another embodiment, for example, an all-solid-state battery in a charged state. The all-solid-state battery 100 includes a positive electrode 200 including a positive electrode current collector 201 and a positive electrode active material layer 203, a negative electrode 400' including a negative electrode current collector 401, a negative electrode layer 403', and a solid-state electrolyte 300 between the positive electrode 200 and the negative electrode 400', and includes a battery case 500 in which these are accommodated

Additionally, lithium ions are deintercalated from the positive electrode active material and deposited on the negative electrode current collector 401', and as a result, a lithium deposition layer 405' is positioned between the current collector (401') and the negative electrode layer 403'.

### MODE FOR PERFORMING THE INVENTION

Hereinafter, examples of the present invention and comparative examples are described. These examples, however, are not in any sense to be interpreted as limiting the scope of the invention.

### (Example 1)

### (1) Manufacturing of Positive Electrode

A first area slurry was prepared by mixing LiNi_{0.8}Co_{0.1}Al_{0.1}O₂ positive electrode active material, Li₆PS₅Cl argyrodite-type first solid-state electrolyte having an average particle size (D50) of 5 µm, carbon nanotube conductive material, and polyvinylidene fluoride binder in an isobutylyl isobutylate solvent. At this time, a mixing ratio of the positive electrode active material, the first solid-state electrolyte, the conductive material, and the binder was set to a weight ratio of 85:13.3:0.4:1.3.

A second area slurry was prepared by mixing LiNi_{0.8}Co_{0.1}Al_{0.1}O₂ positive electrode active material, Li₆PS₅Cl argyrodite-type second solid-state electrolyte having an average particle size (D50) of 1 µm, and carbon nanotube conductive material in an octyl acetate solvent. At this time, a mixing ratio of the positive electrode active material, the first solid-state electrolyte, the conductive material, and the binder was set to a weight ratio of 85:13.3:0.4:1.3.

The second area slurry was coated on an aluminum current collector and then, dried at 60 °C and compressed to form a second area, and on this second area, the first area slurry was coated and then, dried at 60 °C and compressed to form a first area, manufacturing a positive electrode for an all-solid-state battery cell. Here, the second area had a thickness of 35 µm, and the first area had a thickness of 35 µm.

### (2) Manufacturing of Negative Electrode

A negative electrode coating layer composition was prepared by mixing a binder of polyvinylidene fluoride, Ag nanoparticles (D50: 60 nm), and carbon black in an N-methyl pyrrolidone solvent. The carbon black was a mixture of single particles with a particle size of 38 nm with secondary particles, wherein primary particles with a particle size of 76 nm were aggregated into the secondary particles with a particle size of 275 nm. The binder, the Ag nanoparticles, and the carbon black were mixed in a weight ratio of 5:23.75:71.25.

The negative electrode coating layer composition was coated on a stainless steel current collector and then, vacuum-dried at 100 °C and compressed, manufacturing a negative electrode including a negative electrode coating layer with a thickness of 7 µm and the current collector with a thickness of 10 µm.

### (3) Manufacturing of Solid-state electrolyte Layer

An isobutyryl isobutyrate binder solution (a solid content: 50 wt%) prepared by adding butyl acrylate as an acrylate-based polymer, was added to an argyrodite-type solid-state electrolyte of Li₆PS₅Cl and then, mixed. Here, the solid-state electrolyte and the binder were mixed in a weight ratio of 98.7:1.3.

The mixing process was performed by using a Thinky mixer. Subsequently, 2 mm zirconia balls were added to the obtained mixture and then, stirred again by using a Thinky mixer to prepare slurry. The slurry was cast on a polytetrafluoroethylene release film and then, dried at room temperature to manufacture a 60 µm-thick solid-state electrolyte layer.

### (3) Manufacturing of All-solid-state Battery Cell

The negative electrode, the solid-state electrolyte, and the positive electrode were sequentially stacked and pressed with a pressure of 2 Nm, fabricating an all-solid-state battery cell. In the fabricated battery cell, the positive electrode layer (except for the current collector) had a thickness of 70 µm, the negative electrode layer (except for the current collector) had a thickness of 7 µm, and the solid-state electrolyte layer had a thickness of 60 µm.

### (Example 2)

A positive electrode was manufactured in the same manner as in Example 1, except that the first area slurry was manufactured using an argyrodite-type first solid-state electrolyte Li₆PS₅Cl having an average particle size (D50) of 3 µm.

The positive electrode was used with the negative electrode and the solid-state electrolyte according to Example 1 to fabricate an all-solid-state battery cell.

### (Example 3)

A positive electrode was manufactured in the same manner as in Example 1, except that a second area slurry was manufactured using an argyrodite-type second solid-state electrolyte Li₆PS₅Cl having an average particle size (D50) of 3 µm.

The positive electrode was used with the negative electrode and the solid-state electrolyte according to Example 1 to fabricate an all-solid-state battery cell.

### (Example 4)

A positive electrode was manufactured in the same manner as in Example 1, except that the first area slurry was manufactured using an argyrodite-type first solid-state electrolyte Li₆PS₅Cl having an average particle size (D50) of 10 µm.

The positive electrode was used with the negative electrode and the solid-state electrolyte according to Example 1 to fabricate an all-solid-state battery cell.

### (Comparative Example 1)

A positive electrode was manufactured in the same manner as in Example 1, except that a first area slurry was prepared using an argyrodite-type first solid-state electrolyte Li₆PS₅Cl having an average particle size (D50) of 1 µm and a second area slurry was manufactured using an argyrodite-type second solid-state electrolyte Li₆PS₅Cl having an average particle size (D50) of 5 µm.

The positive electrode was used with the negative electrode and the solid-state electrolyte according to Example 1 to fabricate an all-solid-state battery cell.

### (Comparative Example 2)

A positive electrode was manufactured in the same manner as in Comparative Example 1, except that a second area slurry was manufactured using an argyrodite-type second solid-state electrolyte Li₆PS₅Cl having an average particle size (D50) of 3 µm.

The positive electrode was used with the negative electrode and the solid-state electrolyte according to Example 1 to fabricate an all-solid-state battery cell.

### (Comparative Example 3)

A positive electrode layer slurry was prepared by mixing LiNi_{0.8}Co_{0.1}Al_{0.1}O₂ positive electrode active material, Li₆PS₅Cl argyrodite-type solid-state electrolyte having an average particle size (D50) of 1 µm, carbon nanotube conductive material, and polyvinylidene fluoride binder in an isobutylyl isobutylate solvent. At this time, a mixing ratio of the positive electrode active material, solid-state electrolyte, conductive material, and binder was set to a weight ratio of 85:13.3:0.4:1.3.

The positive electrode slurry was coated on an aluminum current collector, and a drying and compressing process was performed at 60 °C to manufacture a positive electrode for an all-solid-state battery. At this time, the thickness of the positive electrode layer was 70 µm.

### (Comparative Example 4)

An all-solid-state battery positive electrode was manufactured in the same manner as in Comparative Example 3, except that the positive electrode slurry was prepared using an argyrodite-type solid-state electrolyte Li₆PS₅Cl having an average particle size (D50) of 5 µm.

The positive electrode was used with the negative electrode and the solid-state electrolyte according to Example 1 to fabricate an all-solid-state battery cell.

### (Example 5)

A second slurry of the third area was prepared by mixing LiNi_{0.8}Co_{0.1}Al_{0.1}O₂ positive electrode active material, Li₆PS₅Cl argyrodite-type solid-state electrolyte having an average particle size (D50) of 2 µm, and carbon nanotube conductive material in an octyl acetate solvent, and a first slurry of the third area was prepared using Li₆PS₅Cl argyrodite-type solid-state electrolyte having an average particle size of 3.5 µm. At this time, a mixing ratio of the positive electrode active material, solid-state electrolyte, conductive material, and binder in the final positive electrode was 85:13.3:0.4:1.3 in weight ratio.

The second area slurry prepared in Example 1 was coated on an aluminum current collector, and a drying and compressing process was performed at 60 °C to form a second area, the second slurry of the third area was coated on the second area, dried at 60 °C, and the first slurry of the third area was coated thereon, and a drying and compressing process was performed at 60 °C to form a third area. Next, the first area slurry prepared in Example 1 was coated, and a drying and compressing process was performed at 60 °C to manufacture an all-solid-state battery positive electrode including the formed first area. At this time, the thickness of the second area was 20 µm, the thickness of the third area was 30 µm, and the thickness of the first area was 20 µm. Additionally, the average size of the third solid-state electrolyte particles in the third area was 2.8 µm.

The positive electrode configurations according to Examples 1 to 4 and Comparative Examples 1 to 4 are summarized in Table 1.

**(Table 1)**

| | First solid-state electrolyte particle average particle size of first area (µm) | Second solid-state electrolyte particle average particle size of second area (µm) | Third solid-state electrolyte particle average particle size of third area (µm) | Thickness of first area (µm) | Thickness of second area (µm) | Thickness of third area (µm) |
|---|---|---|---|---|---|---|
| Example 1 | 5 | 1 | - | 35 | 35 | - |
| Example 2 | 3 | 1 | - | 35 | 35 | - |
| Example 3 | 5 | 3 | - | 35 | 35 | - |
| Example 4 | 10 | 1 | - | 35 | 35 | - |
| Comparative Example 1 | 1 | 5 | - | 35 | 35 | - |
| Comparative Example 2 | 1 | 3 | - | 35 | 35 | - |
| Comparative Example 3 | 1 (single region) | | | 70 | | - |
| Comparative Example 4 | 5 (single region) | | | 70 | | - |
| Example 5 | 5 | 1 | 2.8 | 20 | 20 | 30 |

### Experimental Example 1) Evaluation of Ionic conductivity and Electronic Conductivity

The positive electrodes according to Examples 1 to 5 and Comparative Examples 1 to 4 were measured with respect to ionic conductivity and electronic conductivity. The results are shown in Table 2.

The ionic conductivity and electronic conductivity were measured by using an electrical resistance spectroscope after sampling each of the positive electrodes with 10Φ (a diameter of 10 mm) and applying a torque of 10 N·m at room temperature (25 °C). Here, a frequency from 500 kHz to 50 mHz was scanned by using an amplitude of 50 mV at open circuit potential.

The results are shown in Table 2.

**(Table 2)**

| | Ionic conductivity (S/cm) | Electronic conductivity (S/cm) |
|---|---|---|
| Example 1 | 0.23 | 1.21 |
| Example 2 | 0.18 | 1.15 |
| Example 3 | 0.34 | 1.13 |
| Example 4 | 0.30 | 1.17 |
| Example 5 | 0.38 | 1.18 |
| Comparative Example 1 | 0.17 | 1.11 |
| Comparative Example 2 | 0.11 | 1.15 |
| Comparative Example 3 | 0.08 | 1.13 |
| Comparative Example 4 | 0.17 | 1.21 |

As shown in Table 2, the electronic conductivities of Examples 1 to 5 were somewhat similar to those of Comparative Examples 1 to 4, but the ionic conductivities were very superior in Comparative Examples 1 to 4.

While this disclosure has been described in connection with what is presently considered to be practical exemplary embodiments, it is to be understood that the invention is not limited to the disclosed embodiments, but, on the contrary, is intended to cover various modifications and equivalent arrangements included within the spirit and scope of the appended claims.

## Claims

1. An all-solid-state battery, comprising
a negative electrode;
an electrolyte layer; and
a positive electrode comprising a positive electrode layer and a current collector supporting the positive electrode layer,
the positive electrode layer comprises a first area adjacent to the electrolyte layer and a second area adjacent to the current collector,
the first area comprises first solid-state electrolyte particles,
the second area comprises second solid-state electrolyte particles, and
an average particle size of the first solid-state electrolyte particles is larger than an average particle size of the second solid-state electrolyte particles.

2. The all-solid-state battery as claimed in claim 1, wherein a ratio of the average particle size of the second solid-state electrolyte particles to the average particle size of the first solid-state electrolyte particles is 1:1.1 to 1:40.

3. The all-solid-state battery as claimed in claim 1, wherein the positive electrode layer is composed of the first area and the second area.

4. The all-solid-state battery as claimed in claim 3, wherein the first area corresponds to a thickness of less than or equal to 70% of the total thickness of the positive electrode layer.

5. The all-solid-state battery as claimed in claim 3, wherein the second area corresponds to a thickness of greater than or equal to 30% of the total thickness of the positive electrode layer.

6. The all-solid-state battery as claimed in claim 3, wherein the first solid-state electrolyte particles comprise solid-state electrolyte large particles and solid-state electrolyte small particles, and
the second solid-state electrolyte particles comprise solid-state electrolyte small particles.

7. The all-solid-state battery as claimed in claim 3, wherein the first solid-state electrolyte particles comprise solid-state electrolyte large particles and solid-state electrolyte small particles, and
the second solid-state electrolyte particles are solid-state electrolyte small particles.

8. The all-solid-state battery as claimed in claim 6, wherein an average particle size ratio of the solid-state electrolyte small particles and the solid-state electrolyte large particles is 1:1.5 to 1:40.

9. The all-solid-state battery as claimed in claim 6, wherein an average particle size of the above solid-state electrolyte large particles is 1 µm to 20 µm.

10. The all-solid-state battery as claimed in claim 6, wherein an average particle size of the solid-state electrolyte small particles is 0.1 µm to 5 µm.

11. The all-solid-state battery as claimed in claim 1, wherein a thickness ratio of the first area and the second area is 70:30 to 30:70.

12. The all-solid-state battery as claimed in claim 1, wherein the positive electrode layer comprises a third area between the first area and the second area.

13. The all-solid-state battery as claimed in claim 12, wherein the first area corresponds to a thickness of less than or equal to 56% and greater than or equal to 24% based on 100% of a total thickness of the positive electrode layer, and the second area corresponds to a thickness of greater than or equal to 24% and less than or equal to 56% based on 100% of a total thickness of the positive electrode layer.

14. The all-solid-state battery as claimed in claim 12, wherein the third area corresponds to 20% to 50% of the total thickness of the positive electrode layer.

15. The all-solid-state battery as claimed in claim 12, wherein the third area comprises third solid-state electrolyte particles, and the third solid-state electrolyte particles have a gradient in which an average particle size increases from a second surface in contact with the second area toward a first surface in contact with the first area.

16. The all-solid-state battery as claimed in claim 15, wherein an average particle size of the third solid-state electrolyte particles on the second surface is 0.1 µm to 5 µm, and an average particle size of the third solid-state electrolyte particles on the first surface is 1 µm to 20 µm.

17. The all-solid-state battery as claimed in claim 12, wherein the third area comprises third solid-state electrolyte particles,
a particle size ratio of the first solid-state electrolyte particles of the first area to a particle size of the second solid-state electrolyte particles of the second area is greater than or equal to 1.1/1 and less than 5/1, and
if the second surface in contact with the second area is set to 0% and the first surface in contact with the first area is set to 100%, an average particle size of the third solid-state electrolyte in the third area increases by 1% to 40% at a position that increases by 10% in a thickness direction from the second surface to the first surface of the positive electrode layer.

18. The all-solid-state battery as claimed in claim 12, wherein the third area comprises third solid-state electrolyte particles,
a particle size ratio of the first solid-state electrolyte particles of the first area to a particle size of the second solid-state electrolyte particles of the second area is greater than or equal to 5/1 and less than or equal to 40/1, and
if the second surface in contact with the second area is set to 0% and the first surface in contact with the first area is set to 100%, an average particle size of the third solid-state electrolyte particles increases by 40 to 390% for every 10% increase in the thickness direction of the positive electrode layer.

19. The all-solid-state battery as claimed in claim 12, wherein the third area is divided into two to five regions in the thickness direction, and the average particle size of the third solid-state electrolyte particles in each region is different.

20. The all-solid-state battery as claimed in claim 12, wherein the third area is divided into two to five regions in the thickness direction, the region in contact with the first area is the first area, the region in contact with the second area is the n region, and an average particle size of the third solid-state electrolyte particles increases in the direction of the first area from the n region.
